(19) Europäisches Patentamt
European Patent Office
Office européen des brevets

(11) **EP 2 180 155 B1**

(12) **FASCICULE DE BREVET EUROPEEN**

(45) Date de publication et mention
de la délivrance du brevet:
**11.07.2012 Bulletin 2012/28**

(51) Int Cl.:
***F01N 3/022*** *(2006.01)*     ***F01N 11/00*** *(2006.01)*
***G01N 27/04*** *(2006.01)*

(21) Numéro de dépôt: **09171216.6**

(22) Date de dépôt: **24.09.2009**

(54) **Filtre à particules comportant une structure céramique et un dispositif pour surveiller l'intégrité de ladite structure céramique**

Partikelfilter umfassend eine Keramikstruktur und vorrichtung zum Überwachen der Funktionfähigkeit dieser Keramikstrukture

Particulate filter with a ceramic structure and an apparatus to control the integrity of the ceramic structure

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **24.10.2008 FR 0857220**

(43) Date de publication de la demande:
**28.04.2010 Bulletin 2010/17**

(73) Titulaire: **Peugeot Citroën Automobiles SA 78140 Vélizy-Villacoublay (FR)**

(72) Inventeurs:
- **Crehan, Gabriel
  75019, PARIS (FR)**
- **Boisseau, Line
  60119, HENONVILLE (FR)**
- **Duparque, Christian
  78270, JEUFOSSE (FR)**

(56) Documents cités:
**EP-A- 0 237 824**     **WO-A-93/08382**
**WO-A-2005/093233**     **JP-A- 2002 097 932**
**US-A1- 2006 059 877**

**Description**

**Domaine technique de l'invention**

La présente invention se rapporte au domaine des filtres à particules utilisés dans une ligne d'échappement d'un moteur pour l'élimination des particules.

L'invention concerne plus particulièrement un filtre à particules comportant une structure céramique et un dispositif pour surveiller l'intégrité dudit filtre à particules.

**Arrière plan technologique**

Les polluants issus de la combustion d'un moteur Diesel ou essence sont majoritairement les hydrocarbures imbrûlés (HC), les oxydes d'azote (monoxyde d'azote NO et dioxyde d'azote $NO_2$), les oxydes de carbone (monoxyde de carbone CO et dioxyde de carbone $CO_2$), et dans le cas des moteur Diesel et des moteurs à injection directe essence, des particules de suies.

Afin de respecter les normes environnementales internationales, la maîtrise des émissions de HC, de CO, de NOx et de particules est nécessaire et des technologies de post-traitement des gaz d'échappement sont indispensables.

Le post-traitement des particules de suies peut être réalisé par l'introduction d'un filtre à particules dans la ligne d'échappement du moteur à combustion interne. Les filtres à particules employés dans le domaine automobile comportent le plus souvent une structure céramique intégrant de nombreux canaux parallèles. Durant le fonctionnement du moteur à combustion interne, le filtre à particules est soumis à une succession de phase de filtration, pendant laquelle les particules de suies contenues dans les gaz d'échappement se déposent et s'accumulent dans le filtre à particules, et de phase de régénération pour éliminer les suies par combustion et conserver ainsi sa pleine efficacité.

Lors des phases de régénération, les particules de suies sont brûlées à l'intérieur de la structure en céramique du filtre à particules qui subit alors des gradients de température importants. De tels gradients de température soumettent le filtre à particules à de fortes contraintes thermiques et mécaniques qui peuvent provoquer des fissurations dans la structure céramique du filtre. Ces fissurations sont susceptibles d'entraîner une perte des capacités de filtration et un risque que le filtre à particules laisse échapper des particules dans l'atmosphère des particules de suies nocives pour la santé et qu'il ne soit plus conforme à la réglementation anti-pollution en vigueur.

Il est donc essentiel de connaître l'état d'intégrité du filtre à particules, c'est-à-dire son niveau de dégradation, et de pouvoir déduire s'il est ou non défectueux.

Une solution connue pour diagnostiquer l'état d'endommagement d'un filtre à particules est d'utiliser un capteur de pression différentielle chargé de mesurer la perte de charge c'est-à-dire l'écart de pression entre les deux cotés du filtre à particules, toute fissuration du filtre entrainant une variation de la perte de charge. Voir aussi le document US 2008/048681 A1. Cette technique a cependant pour premier inconvénient d'être sensible non seulement à la présence de fissures mais aussi à l'accumulation des suies dans le filtre, accumulation qui peut compenser l'effet des fissures sur la perte de charge. Ainsi cette solution technique ne permet pas de mesurer le seul endommagement du filtre à particules. Cette technique a pour second inconvénient de ne pas avoir une résolution suffisante pour pouvoir distinguer des états de dégradation plus ou moins important d'une structure céramique pour filtre à particules. En effet, en raison du biais possible sur la perte de charge dû à l'accumulation des suies dans le filtre, seul une variation importante de la perte de charge entre les deux cotés du filtre ne laisse aucun doute d'interprétation sur l'état de dégradation du filtre. Enfin cette technique a encore pour inconvénient de ne pas décrire le cas d'une structure céramique de filtre à particules constituée d'une pluralité de briques céramiques assemblées entre elles par un ciment réfractaire.

L'invention se rapporte à un filtre à particules comportant une structure céramique et à un dispositif pour surveiller l'intégrité de la structure céramique qui soit apte, d'une part à mesurer le seul endommagement du filtre, indépendamment de son encrassement, et d'autre part à faire la distinction entre des niveaux de dégradations plus ou moins importants du filtre.

L'invention concerne donc un filtre à particules disposé sur une ligne d'échappement de moteur à combustion interne comprenant d'une part une structure céramique, d'autre part un dispositif pour surveiller l'intégrité dudit filtre à particules comportant des moyens de détermination d'une propriété physique de la structure céramique associés à des moyens de calcul qui déduisent de la dite détermination un état d'intégrité de la structure céramique, **caractérisé en ce que** ladite structure céramique comporte une pluralité de briques céramiques.

- et en ce que la propriété physique déterminée est une résistance électrique globale de la structure céramique dépendante d'une résistance électrique locale d'au moins une brique céramique. En effet, il est apparu que la résistance électrique de la structure céramique d'un filtre à particules se trouve principalement modifiées par les fissurations. Par ailleurs, l'invention peut comporter l'une ou plusieurs des caractéristiques suivantes :

- la résistance électrique locale concerne au moins la zone centrale de la brique céramique. On focalise ainsi la surveillance sur une zone de la brique céramique apparue comme sensible à une amorce de fissure.

- la résistance électrique globale de la structure céramique est la résistance électrique équivalente à l'association de résistances électriques locales d'au moins une brique céramique reliée en parallèle au moyen de conducteurs électriques. Ainsi, une variation de résistance électrique globale est détectée dès la défaillance de l'une quelconque des briques céramiques.

- la résistance électrique globale de la structure céramique est la résistance électrique équivalente à l'association de résistances électriques locales d'au moins une brique céramique reliée en série au moyen de conducteurs électriques intermédiaires. Ainsi, une variation de résistance électrique globale est détectée dès la défaillance de l'une quelconque des briques céramiques. On notera qu'en cas de défaillance de l'une des briques céramiques, la variation de résistance électrique globale est plus importante que pour un agencement en parallèle.

- la résistance électrique globale est déduite de la mesure d'une tension dans un circuit électrique en pont de Wheatstone.

- les moyens de détermination comportent une sonde de tension pour mesurer la tension entre deux points d'une diagonale du pont de Wheatstone.

- le filtre à particules comporte des moyens de mesure de température pour mesurer une température dudit filtre à particules, afin de prendre en compte ladite température dans la détermination de la résistance électrique globale de la structure céramique.

- les moyens de mesure de température comprennent une sonde de température.

- les moyens de mesure de température comprennent un modèle numérique d'estimation de la température du filtre à particules.

- les moyens de calcul comprennent une cartographie de l'état d'intégrité de la structure céramique en fonction de la tension dans le pont de Wheatstone et de la température dudit filtre à particules.

Par ailleurs, l'invention a aussi pour objet un procédé de diagnostic d'un dysfonctionnement d'un filtre à particules selon l'invention, **caractérisé en ce qu**'il comprend les étapes suivantes :

- la mesure d'une température du filtre à particules,
- la détermination d'une résistance électrique globale de la structure céramique,
- la détermination d'un état d'intégrité de la structure céramique à partir de la température du filtre à particules et de la résistance électrique globale de la structure céramique,
- l'établissement d'un diagnostic d'un dysfonctionnement du filtre à particules sur la base d'une comparaison entre l'état d'intégrité de la structure céramique et un état d'intégrité critique prédéterminé.

Brève description des dessins

D'autres particularités et avantages apparaîtront à la lecture de la description ci-après d'un mode particulier de réalisation, non limitatif de l'invention, faite en référence aux figures dans lesquelles :

- La figure 1 est une représentation schématique d'un pont de Wheatstone.
- La figure 2 est une représentation schématique d'un premier mode de réalisation de filtre à particules comprenant une structure céramique composé d'une pluralité de briques céramiques et d'un dispositif pour surveiller l'intégrité de la structure céramique.
- La figure 3 est une représentation schématique d'un second mode de réalisation de filtre à particules comprenant une structure céramique composé d'une pluralité de briques céramiques et d'un dispositif pour surveiller l'intégrité de la structure céramique.
- La figure 4 présente un exemple de courbe de calibration permettant de déterminer le niveau de dégradation de la structure céramique du filtre à particules à partir de la mesure de la résistance électrique globale de la structure céramique et de la température du filtre à particules.

**Description détaillée**

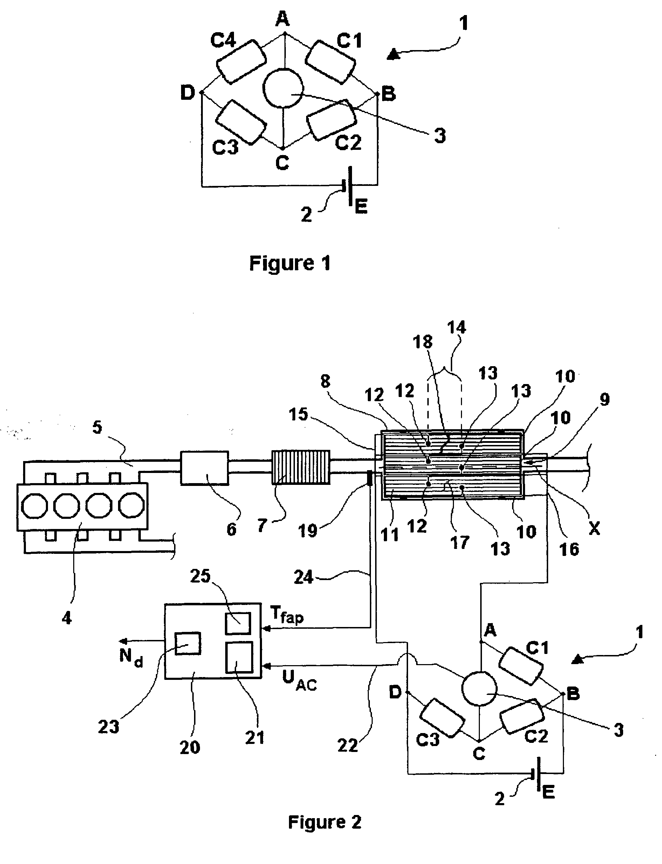

La figure 1 présente un circuit électrique en pont de Wheatstone 1 reliant quatre conducteurs ohmiques C1, C2, C3, C4 de résistance électrique respective R1, R2, R3, R4, selon un quadrilatère ABCD. Les points diagonalement opposés B et D sont connectés à une source de courant 2 ayant une tension d'alimentation E et les points diagonalement opposés A et C sont connectés à une sonde de tension 3, tel qu'un voltmètre sensible, pour mesurer une différence de potentiel, $U_{AC}$ entre les points A et C.

Dans le circuit électrique en pont de Wheatstone 1 décrit en figure 1, si la résistance électrique R4 du conducteur ohmique C4 est la résistance inconnue à mesurer et R1, R2, R3 sont les résistances connues, non ajustables, des conducteurs ohmiques respectifs C1, C2, et C3. La différence de potentiel, $U_{AC}$, relevée par la sonde de tension 3 entre les points A et C est utilisée pour déduire la valeur de la résistance R4 du conducteur ohmique C4, à partir de la relation suivante, qui donne l'équivalent Thévenin du circuit entre les points A et C :

$$U_{AC} = E\left(\frac{R_1}{R_4 + R_1} - \frac{R_2}{R_3 + R_2}\right) \qquad (1)$$

Si R1, R2, R3, ainsi que la différence de potentiel, $U_{AC}$, entre les points A et C, sont connues avec précision, alors la valeur de la résistance R4 peut être mesurée avec précision.

Alternativement, dans une variante de conception de pont de Wheatstone, non décrite ici, pour déterminer la résistance électrique R4 du conducteur ohmique C4, R1, et R3 sont des résistances connues non ajustables tandis que, dans cette variante, R2 est une résistance connue et ajustable. Dans ce cas, quand le pont de Wheatstone est dit équilibré, le rapport (R2/R1) est égal au rapport (R4/R3), et la différence de potentiel, $U_{AC}$, entre les points A et C est nulle. Ainsi, afin de déterminer la valeur de la résistance R4, la résistance R2 est ajustée jusqu'à ce que la différence de potentiel entre les points A et C soit nulle. En pratique toutefois, il est généralement plus rapide de lire une différence de potentiel que d'ajuster une valeur de résistance.

Sur la figure 2 est représenté un moteur à combustion interne 4, de type Diesel ou à allumage par compression pour véhicule automobile. Bien évidemment, l'invention n'est pas limitée à ce type de moteur et peut s'appliquer également aux moteurs à allumage commandé et notamment à ceux fonctionnant par injection directe. Le moteur à combustion interne 4 est doté d'une ligne d'échappement 5 par laquelle sont évacués les gaz d'échappement produits dans le moteur 4.

Les gaz d'échappement sont traités en passant successivement par un catalyseur d'oxydation 6, par un catalyseur deNOx 7, puis par un filtre à particules 8. Le catalyseur d'oxydation 6 permet l'élimination des hydrocarbures imbrûlés HC, du monoxyde de carbone CO et l'oxydation d'une partie des oxydes d'azote NO en $NO_2$. Le catalyseur deNOx 7 permet la réduction des oxydes d'azote $NO_x$ présents dans les gaz d'échappement. Le filtre à particules 8 contient une structure en céramique 9 dont la forme s'étend sur un axe longitudinal X. La structure céramique 9 comporte une pluralité de briques céramiques 10 intégrant de nombreux canaux parallèles 11 dans lesquels les particules de suies contenues dans les gaz d'échappement se déposent et s'accumulent. Le matériau des briques céramique 10 est par exemple de la Cordiérite ou du carbure de silicium, SiC. Les briques céramiques sont assemblées entre elles par un moyen de collage tel qu'un ciment réfractaire.

La présence du catalyseur d'oxydation 6 et du catalyseur DeNOx 7 n'est pas obligatoire pour la réalisation de l'invention. De même d'autres organes de dépollution non représentés sur la figure 2 tels qu'un second catalyseur d'oxydation ou un catalyseur SCR permettant la réduction des oxydes d'azote $NO_x$ présents dans les gaz d'échappement, par réaction catalytique sélective entre les $NO_x$ et un agent réducteur peuvent compléter la ligne d'échappement, pour améliorer le traitement antipollution des gaz d'échappement sans modifier la portée de l'invention décrite ici.

Sur la figure 2 est aussi présenté un pont de Wheatstone 1 reliant quatre conducteurs ohmiques selon un quadrilatère ABCD. Plus précisément, un premier conducteur ohmique C1, de valeur de résistance électrique R1, est connectée entre les points A et B du quadrilatère, un second conducteur ohmique C2, de valeur de résistance électrique R2, est connectée entre les points B et C, un troisième conducteur ohmique C3, de valeur de résistance électrique R3, est connectée entre les points C et D, la structure céramique 9 du filtre à particules 8 forme le quatrième conducteur ohmique du pont de Wheatstone 1.

Par ailleurs, les points diagonalement opposés B et D sont connectés à une source de courant 2 ayant une tension d'alimentation E et les points diagonalement opposés A et C sont connectés à une sonde de tension 3, tel qu'un voltmètre sensible, pour mesurer une différence de potentiel, $U_{AC}$ entre les points A et C formant une diagonale du pont de Wheatstone 1.

Dans ce premier mode de réalisation, chaque brique céramique 10 composant la structure céramique 9 comprend un premier point de contact électrique 12 situé dans la structure de la brique céramique 10 et un second point de contact électrique 13 situé dans la brique céramique 10. Les points de contact électrique 12 et 13 sont disposés de façon à délimiter une tranche 14 de la brique céramique 10 qui s'étend selon l'axe longitudinale X de ladite structure, avantageusement dans la zone centrale de la brique céramique 10. Cette tranche 14 représente la partie de la céramique, dont l'intégrité, c'est à dire le niveau de dégradation notamment dû à des fissurations, est à surveiller. La tranche 14 de la brique céramique 10 a une résistance électrique locale, Rb.

Conformément à l'invention, les premiers points de contact électrique 12 sont reliés en parallèle au point D du pont de Wheatstone 1 par des conducteurs électriques 12 et les seconds points de contact électrique 13 sont reliés au point A du pont de Wheatstone 1 par des conducteurs électriques 16.

Selon cet agencement, la résistance électrique globale Rfap de la structure céramique 9 est donc la résistance électrique équivalente à l'association des résistances électriques locales Rb des briques céramiques 10 reliées en parallèle au moyen des conducteurs électriques 15, 16 tels que des fils métalliques. De préférence les fils métalliques doivent résister aux températures vues par le filtre à particules 8 ainsi qu'à la corrosion que peut provoquer les gaz d'échappement. Les conducteurs électrique 15, 16 peuvent comprendre une partie dans des matériaux tels que, à titre indicatif non exhaustif, en Inconel, Nickel, Platine.... Ainsi, si par soucis de simplicité, on considère que chaque brique céramique 10 à une résistance locale Rb sensiblement équivalente, la relation entre la résistance électrique globale Rfap de la structure céramique 9 et la résistance locale Rb, pour une structure céramique 9 composée de n briques céramiques 10 est la suivante :

$$\frac{1}{R_{fap}} = \sum_{1}^{n} \frac{1}{R_{b_n}} \qquad (2)$$

L'intégrité de la structure céramique 9 du filtre à particules 8 est connue par la mesure de la résistance électrique globale Rfap. En effet, sous l'effet de contraintes thermomécaniques subies par la structure céramique 9 pendant par exemple une phase de régénération du filtre à particules 8, dès qu'une amorce de fissure 17 ou qu'une fissure ouverte 18 apparaît au sein d'une tranche 14 d'une des briques céramiques 10 de la structure céramique 9, cette fissuration a pour effet de modifier la valeur de la résistance électrique locale Rb de ladite brique et par voie de conséquence, en accord avec la relation (2), la résistance électrique globale Rfap. Cette modification de résistance électrique, Rfap, entraîne au niveau du pont de Wheatstone 1, une modification de la différence de potentiel, $U_{AC}$, entre les points A et C.

Il est particulièrement avantageux que les points de contact électrique 12 et 13 soient placés dans une zone sensiblement centrale de la structure céramique 9, comme le montre la figure 2. En effet, si une amorce de fissure 17 ou une fissure ouverte 18 apparaît au sein de la structure d'une des briques céramiques 10 pendant, par exemple, une phase de régénération du filtre à particules 8, il est apparu que la fissuration a le plus souvent lieu dans une zone centrale de la brique céramique 10. L'épaisseur de la tranche 14 peut représenter 30% à 50% de la longueur totale de la brique céramique 10.

Une partie des conducteurs électriques 15 et 16 est intégrée dans la structure céramique 9. Les conducteurs électriques 15 et 16 peuvent relier leurs points de contacts électriques correspondants 12 et 13 en passant par exemple à l'intérieur de la structure céramique 9, dans le ciment réfractaire, puis en traversant la brique céramique 10. Les conducteurs électriques 15, 16 peuvent aussi être collés en partie à la surface de la structure céramique ou encore être passés dans les canaux 11. Le collage peut être effectué avec une pate céramique. Avantageusement la colle est conductrice. La profondeur d'implantation des point de contacts électriques 12 et 13 dans la structure de la brique céramique 10, selon une direction perpendiculaire à l'axe longitudinal X, peux varier de quelques millimètres de la surface de la brique céramique 10 jusqu'à son milieu.

En variante d'implantation en parallèle, les conducteurs électriques 15 et 16 peuvent être enroulés autour de chaque brique céramique 10 de façon à délimiter une tranche 14 entre chaque enroulement. Le principe est ici de maintenir un contact électrique excellent entre la partie des conducteurs électriques 15 et 16 entourant la brique céramique 10, et ladite brique céramique 10, de manière à ce que les variations de différence de potentiel entre les points A et C soient dues essentiellement à une dégradation physique, due par exemple à une fissuration 18, dans la structure céramique 9 du filtre à particules 8 et non pas à la qualité des contacts électriques.

Le dispositif comporte une sonde de température 19 disposée sur la ligne d'échappement 5, en amont de la structure céramique 9 pour déterminer une température du filtre à particules, Tfap. En effet, il est connu dans le domaine de l'électricité que la résistance d'un élément est dépendante de sa température. La connaissance de la température permet de connaitre la part de la température de celle d'une dégradation physique telle qu'une fissuration sur la valeur de la résistance électrique globale, Rfap, de la structure céramique 9. La sonde de température 19 est de préférence un thermocouple, qui représente une solution technique économique pour déterminer une température. Le choix technique décrit ici est d'implanter la sonde de température 19 au plus près du filtre à particules 8 et donc de la structure céramique 9, de mesurer une température des gaz d'échappement et de faire l'hypothèse que cette température des gaz d'échappement mesurée est sensiblement représentative de la température du filtre à particules 8 pour des conditions de fonctionnement moteur où celui-ci déjà chaud de plusieurs centaines de degrés comme par exemple lors d'une phase de régénération.

La figure 2 présente la sonde de température 19 implantée en amont de la ligne d'échappement 5, mais tout autre lieu d'implantation sur la ligne d'échappement 5 ou dans le filtre à particules 8 permettant d'obtenir une température la plus représentative possible de la température de la structure de la céramique 9 est une variante acceptable de ce mode de réalisation.

Une autre variante non représentée ici consiste à utiliser un modèle numérique d'estimation de la température du filtre à particules 8.

Par ailleurs, le dispositif comprend un moyen de calcul 20 tel qu'un calculateur électronique. Le calculateur 20 comprend un moyen de détermination 21 de la valeur de la résistance électrique globale, Rfap de la structure céramique 9. Le calculateur 20 est connecté à la sonde de tension 3 par une connexion 22. La sonde 3 mesure la différence de potentiel, $U_{AC}$, entre les points A et C, et la valeur de cette tension est communiquée au calculateur 20 qui peut, avec le moyen de détermination 21 calculer analytiquement une valeur de la résistance électrique globale, Rfap, de la structure céramique 9. Sur la base de la relation (1), l'expression de Rfap est la suivante :

$$R_{fap} = R_1 \left( \frac{1}{\left( \dfrac{U_{ac}}{E} + \dfrac{R_2}{R_3 + R_2} \right)} - 1 \right) \tag{3}$$

Le calculateur 20 comprend aussi un moyen de détermination 23 d'un niveau de dégradation, Nd, de la structure céramique 9 à partir de valeur de la résistance électrique globale, Rfap, de la structure céramique 9 et de la température, Tfap, du filtre à particules 8. Le calculateur 20 est relié à la sonde de température 19 par une connexion 24. De plus, le calculateur 20 comprend une cartographie 25 mise en mémoire des niveaux de dégradation de la structure céramique 9 du filtre à particules 8 en fonction de la valeur de la résistance électrique globale, Rfap, et de la température, Tfap, du filtre à particules 8. Une telle cartographie 25 est déterminée, par exemple, à partir de courbes de calibration obtenues par des essais sur banc moteur ou par des calculs de modélisation.

La résistance électrique globale, Rfap, étant déterminée par la mesure de la différence de potentiel, $U_{AC}$, entre les points A et C du pont de Wheatstone 1, le niveau de dégradation Nd de la structure céramique 9 du filtre à particules 8 peut aussi s'exprimer directement en fonction de la valeur de la tension, $U_{AC}$, entre les points A et C du pont de Wheatstone 1, et de la température, Tfap, du filtre à particules 8.

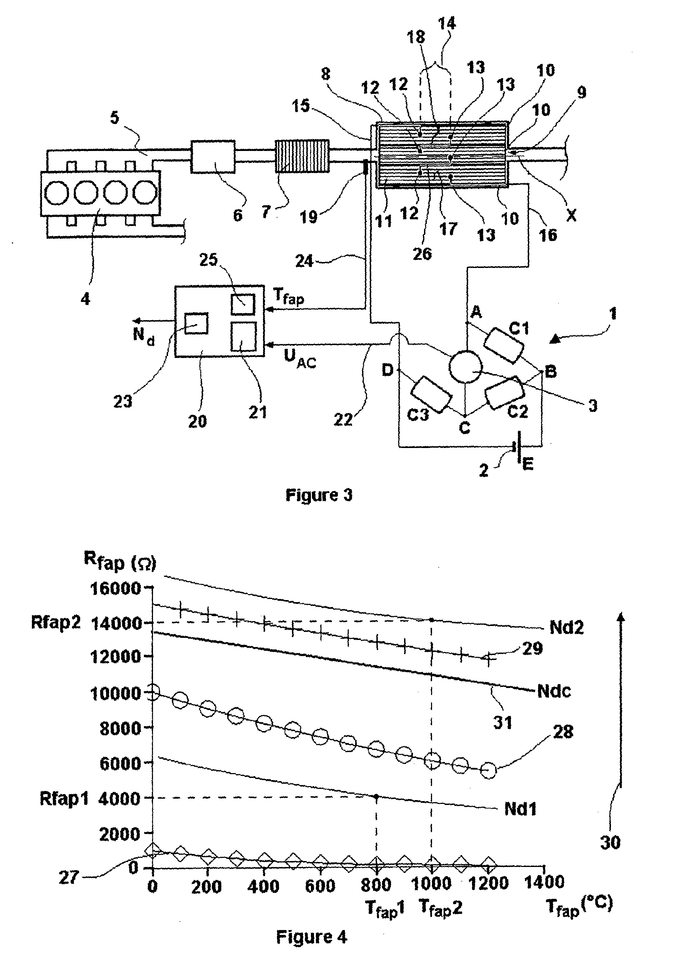

La figure 3 présente un deuxième mode de réalisation de l'invention. Les éléments de la figure 3 identiques à la figure 2 portent les mêmes références.

A l'instar du premier mode de réalisation précédemment décrit, dans ce second mode de réalisation, chaque brique céramique 10 composant la structure céramique 9 comprend un premier point de contact électrique 12 et un second point de contact électrique 13 situés dans la structure de la brique céramique 10. Les points de contact électrique 12 et 13 sont disposés de façon à délimiter une tranche 14 de la brique céramique 10 qui s'étend selon l'axe longitudinale X de ladite structure, dans la zone centrale de la brique céramique 10. Cette tranche 14 représente la partie de la céramique, dont l'intégrité, c'est à dire le niveau de dégradation notamment dû à des fissurations, est à surveiller. La tranche 14 de la brique céramique 10 a une résistance électrique locale, Rb.

Conformément à l'invention, dans ce second mode de réalisation, le détail du circuit électrique reliant le point D au point A du pont de Wheatstone 1 est le suivant : le point D du pont de Wheatstone 1 est relié par un conducteur électrique 15 au premier point de contact électrique 12 d'un première brique céramique 10. Le second point de contact 13 de cette même première brique est reliée au moyen d'un conducteur électrique intermédiaire 26 au premier point de contact électrique 12 d'une seconde brique céramique 10 et ainsi de suite jusqu'à relier le second point de contact électriques 13 de d'un dernière brique céramique 10 au point A du pont de Wheatstone 1 par un conducteur électrique 16. Les conducteurs électriques intermédiaires 26 sont intégrés en partie dans le ciment réfractaire liant les briques céramiques 10.

Selon cet agencement, la résistance électrique globale Rfap de la structure céramique 9 est donc la résistance électrique équivalente à l'association des résistances électriques locales Rb des briques céramiques 10 reliées en série au moyen des conducteurs électriques intermédiaires 26. Ainsi, si, par soucis de simplicité, on considère que chaque brique céramique 10 à une résistance locale Rb sensiblement équivalente, la relation entre la résistance électrique globale Rfap de la structure céramique 9 et la résistance locale Rb, pour une structure céramique 9 composée de n briques céramiques 10 est la suivante :

$$R_{fap} = \sum_{1}^{n} R_{bn} \qquad (4)$$

Dans ce second mode de réalisation, si au cours par exemple d'une phase de régénération du filtre à particules 8, une fissure 18 ouverte se crée dans une brique céramique 10 entre ses points de contact électriques 12, 13, la résistance locale Rb augmentera de plusieurs ordres de grandeur en raison de la présence d'air et ainsi, conformément à la relation (4), la résistance électrique globale Rfap de la structure céramique 9. Ce second mode de réalisation a pour avantage de provoquer, en cas de fissuration, une plus grande variation de la résistance électrique globale Rfap que pour le premier mode de réalisation.

La figure 4 présente maintenant plus précisément pour le second mode de réalisation un exemple de courbes de calibration donnant, trois états définis de dégradation de la structure céramique 9, un profil d'évolution de la résistance électrique globale, Rfap, de la structure céramique 9 en fonction de la température Tfap, du filtre à particules 8, à niveau de dégradation, Nd, de la structure céramique 9 constant.

D'une manière générale, la résistance électrique des matériaux varie avec la température donc la connaissance de la température Tfap, du filtre à particules 8 est ici utile pour s'affranchir de l'effet de la température sur la détermination du niveau de dégradation, Nd, de la structure céramique 9.

Cependant, la variation de la résistance électrique d'un matériau est plus ou moins importante en fonction de la température. Contrairement au carbure de silicium qui est plutôt conducteur, la résistance électrique ne varie pas beaucoup en fonction de la température pour des matériaux céramiques isolants tels que la cordiérite. Pour cette raison, on peut considérer que pour les matériaux qui sont de très mauvais conducteurs, l'effet de température sur la détermination du niveau de dégradation, Nd, de la structure céramique 9 est négligeable et envisager, dans une variante non décrite ici, de ne pas utiliser de mesure de température.

Une première courbe de calibration 27 montre un profil de résistance électrique globale, Rfap, pour un état de structure céramique 9 normal, sans dégradation. Une seconde courbe de calibration 28 montre un profil de résistance électrique globale, Rfap, pour un état de structure céramique 9 légèrement dégradé, c'est-à-dire par exemple, avec des fissures modestes 17, non ouvertes. Une troisième courbe de calibration 29 montre un profil de résistance électrique globale, Rfap, pour un état de structure céramique 9 très dégradé, c'est-à-dire, par exemple, avec des fissures ouvertes 18.

En remarque générale, on note que, comme le résume la flèche 30, une augmentation de la résistance électrique globale, Rfap, de la structure céramique 9 indique un accroissement du niveau de dégradation dans une tranche 14 d'au moins une brique céramique 10. En effet, un ordre de grandeur de la résistivité d'un matériau céramique traditionnellement utilisé pour les structures de filtre à particules tel que le carbure de silicium est de $10^3$ $\Omega$.m. La résistivité de l'air est, quant à elle, supérieure à $10^9$ $\Omega$.m. La fissuration entraine des discontinuités de la structure céramique et en cas de fissure ouverte 18 de la structure céramique entre les deux points de mesure 12 et 13, la résistance électrique locale Rb et donc (relation (4)) la résistance électrique globale Rfap augmentera de plusieurs ordres de grandeur.

Les profils de résistance électrique globale, Rfap, de la structure céramique 9 présentés sur la figure 4, en fonction de la température, Tfap, du filtre à particules 8, à niveau de dégradation constant sont indicatifs et peuvent varier selon l'application en fonction de paramètres pouvant influencer la valeur de la résistance électrique, Rfap, tels que par exemple la nature du matériau céramique utilisé, l'épaisseur de la tranche 14 délimitée par les points de contact 12 et 13.

Par ailleurs, pour s'affranchir d'une modification de la résistance électrique globale, Rfap, de la structure céramique 9, par la présence par exemple de suies, ou encore de résidus de régénération, il est fortement conseillé, mais pas obligatoire, de faire des mesures de la résistance électrique après une phase de régénération.

Avantageusement un profil critique 31 défini, sur le graphe de la figure 4, un niveau de dégradation critique, Ndc, au-delà duquel on considère que la structure céramique 9 est trop abimée, par exemple en cas de fissuration d'une des briques céramiques 10 constituant la structure céramique 9, et que sa capacité de filtration n'est plus conforme à nos exigences comme par exemple la réglementation anti-pollution en vigueur. Le profil critique 31 peut alors être utilisé comme seuil d'alerte dans le cas d'un diagnostic d'un dysfonctionnement de la structure céramique 9 du filtre à particules 8.

A partir des valeurs de la résistance électrique globale Rfap et de la température, Tfap, du filtre à particules 8, le moyen de détermination 23 de l'intégrité de la structure céramique 9 détermine à l'aide de la cartographie 25 un niveau de dégradation, Nd, par exemple par des méthodes numériques d'interpolation, afin de pouvoir établir un diagnostic de dysfonctionnement de la structure céramique 9 sur la base d'une comparaison entre le niveau de dégradation, Nd, et le niveau de dégradation critique, Ndc, prédéterminé.

Afin de mieux comprendre ce dernier point, nous présentons à titre d'exemple deux cas de figure :

Dans un premier cas illustré sur la figure 4, la différence de potentiel $U_{AC}$ mesurée entre les points A et C du pont de Wheatstone 1 conduit à déterminer une résistance électrique Rfap1 équivalente à 4000 Ohms. La sonde de température 19 donne par ailleurs une température, Tfap1, du filtre à particules 8 de 800 °C. A partir ces valeurs de résistance électrique Rfap1 et de température Tfap1, le graphe illustré en figure 4 permet de déterminer un niveau de dégradation Nd1 qui se trouve compris entre la première courbe de calibration 27 et la seconde courbe de calibration 28, ce qui indique un état de dégradation plutôt faible. Dans ce cas, on considère que la capacité de filtration de la structure céramique 9 est toujours conforme à la réglementation anti-pollution et qu'aucune action n'est à envisager.

Dans un second cas illustré sur la figure 4, la différence de potentiel $U_{AC}$ entre les points A et C du pont de Wheatstone 1 conduit à déterminer une résistance électrique globale Rfap2 équivalente à 14000 Ohms. La sonde de température 19 donne par ailleurs une température, Tfap2, de filtre à particules 8 de 1000 °C. A partir de ces valeurs de résistance électrique Rfap2 et de température Tfap2, le graphe illustré en figure 4 permet de déterminer un niveau de dégradation Nd2 qui se trouve situé au-delà de la troisième courbe de calibration 29, ce qui indique un état de dégradation élevé. De plus, dans ce deuxième exemple, le niveau de dégradation Nd2 est supérieur au niveau de dégradation critique Ndc défini par le profil critique 31. Dans ce cas, on considère que la capacité de filtration de la structure céramique 9 n'est plus conforme à la réglementation anti-pollution et une action de maintenance, est à envisager.

Ainsi, les deux exemples précédents montrent que le dispositif proposé par l'invention est susceptible de faire la distinction entre différents niveaux de dégradation de la structure céramique 9 et un développement avantageux de l'invention prévoit qu'un diagnostic de dysfonctionnement de la structure céramique 9 est établi si le niveau de dégradation, Nd, est supérieur au niveau de dégradation critique, Ndc.

Les modes de réalisation décrits aux figures 2 et 3 ne sont aucunement limitatifs. Selon une variante, les points de contacts 12 et 13 peuvent délimiter une tranche 14 qui comprend sensiblement toute la structure céramique. Ainsi l'invention est susceptible de pouvoir détecter l'apparition de fissurations en un endroit quelconque au sein de la structure céramique 9.

De plus, l'invention ne se limite pas à un type particulier de matériau céramique utilisé pour les filtres à particules. A titre indicatif, d'autres matériaux céramiques pouvant être utilisés sont majoritairement composés de : $CeO_2$, $ZrO_2$, $Al_2O_3$, $Si_3N_4$, Zéolithes. L'invention se prête aussi à surveiller l'intégrité de structures céramiques catalysées de filtres à particules, c'est-à-dire des structures céramiques comprenant un dépôt catalytique à la surface du matériau céramique.

Selon une autre variante les points de contacts 12 et 13 de chacune des briques céramiques 10 peuvent aussi être connectés successivement au pont de Wheatstone 1 par un système de commutation approprié, ceci afin de permettre une identification de la brique céramique 10 à l'origine d'un dysfonctionnement du filtre à particules.

Selon une autre variante, plusieurs tranches 14 consécutives peuvent être délimités au sein de chacune des briques céramiques 10, et être connectées au moyen d'un circuit électrique approprié à un ou plusieurs Pont de Wheatstone 1 afin d'obtenir l'avantage d'une résolution spatiale de l'intégrité des briques céramiques 10.

**Revendications**

1. Filtre à particules disposé sur une ligne d'échappement (5) de moteur à combustion interne (4) comprenant d'une part une structure céramique (9), d'autre part un dispositif pour surveiller l'intégrité dudit filtre à particules (8) comportant des moyens de détermination d'une propriété physique de la structure céramique (9) associés à des moyens de calcul (20) qui déduisent de la dite détermination un état d'intégrité (Nd), niveau de dégradation dû à des fissurations de la structure céramique (9), **caractérisé en ce que** ladite structure céramique (9) comporte une pluralité de briques céramiques (10) assemblées entre elles par un moyen de collage et **en ce que** la propriété physique déterminée est une résistance électrique globale (Rfap) de la structure céramique (9) dépendante d'une résistance électrique locale (Rb) d'au moins une brique céramique (10).

2. Filtre à particules selon la revendication 1, **caractérisé en ce que** la résistance électrique locale (Rb) concerne au moins la zone centrale de la brique céramique (10).

3. Filtre à particules selon la revendication 1 ou la revendication 2, **caractérisée en ce que** la résistance électrique globale (Rfap) de la structure céramique (9) est la résistance électrique équivalente à l'association de résistances électriques locales (Rb) d'au moins une brique céramique (10) reliées en parallèle au moyen de conducteurs électriques (15, 16).

4. Filtre à particules selon la revendication 1 ou la revendication 2, **caractérisée en ce que** la résistance électrique globale (Rfap) de la structure céramique (9) est la résistance électrique équivalente à l'association de résistances électriques locales (Rb) d'au moins une brique céramique (10) reliées en série au moyen de conducteurs électriques intermédiaires (26).

5. Filtre à particules selon l'une quelconque des revendications 1 à 4, **caractérisé en ce que** la résistance électrique globale (Rfap) est déduite de la mesure d'une tension ($U_{AC}$) dans un circuit électrique en pont de Wheatstone (1).

6. Filtre à particules selon la revendication 5, **caractérisé en ce que** les moyens de détermination comportent une sonde de tension (3) pour mesurer la tension ($U_{AC}$) entre deux points d'une diagonale (AC) du pont de Wheatstone (1).

7. Filtre à particules selon l'une quelconque des revendications 1 à 6, **caractérisé en ce qu'**il comporte des moyens de mesure de température pour mesurer une température (Tfap) dudit filtre à particules (8), afin de prendre en compte ladite température dans la détermination de la résistance électrique globale (Rfap) de la structure céramique (9).

8. Filtre à particules selon la revendication 7, **caractérisé en ce que** les moyens de mesure de température comprennent une sonde de température (19).

9. Filtre à particules selon la revendication 8, **caractérisé en ce que** les moyens de mesure de température comprennent un modèle numérique d'estimation de la température (Tfap) du filtre à particules (8).

10. Filtre à particules selon l'une quelconque des revendications 7 à 9, **caractérisé en ce que** les moyens de calcul (20) comprennent une cartographie (25) de l'état d'intégrité (Nd) de la structure céramique (9) en fonction de la tension ($U_{AC}$) dans le pont de Wheatstone (1) et de la température (Tfap) dudit filtre à particules (8).

11. Procédé de diagnostic d'un dysfonctionnement d'un filtre à particules (8) selon l'une quelconque des revendications 7 à 10, **caractérisé en ce qu'**il comprend les étapes suivantes :

- la mesure d'une température (Tfap) du filtre à particules (8),
- la détermination d'une résistance électrique globale (Rfap) de la structure céramique (9),
- la détermination d'un état d'intégrité (Nd), niveau de dégradation dû à des fissurations de la structure céramique (9) à partir de la température (Tfap) du filtre à particules (8) et de la résistance électrique globale (Rfap) de la structure céramique (9),
- l'établissement d'un diagnostic d'un dysfonctionnement du filtre à particules (8) sur la base d'une comparaison entre l'état d'intégrité (Nd) de la structure céramique (9) et un état d'intégrité critique (Ndc) prédéterminé.

**Claims**

1. A particle filter arranged on an exhaust line (5) of an internal combustion engine (4), including on the one hand a ceramic structure (9), on the other hand a device for monitoring the integrity of the said particular filter (8) comprising means for determining a physical property of the ceramic structure (9) associated with calculation means (20) which deduce from the said determination an integrity state (Nd), a level of degradation due to cracking of the ceramic structure (9), **characterized in that** the said ceramic structure (9) comprises a plurality of ceramic bricks (10) assembled together by a bonding means and **in that** the determined physical property is an overall electrical resistance (Rfap) of the ceramic structure (9) dependent on a local electrical resistance (Rb) of at least one ceramic brick (10).

2. The particle filter according to Claim 1, **characterized in that** the local electrical resistance (Rb) concerns at least the central zone of the ceramic brick (10).

3. The particle filter according to Claim 1 or Claim 2, **characterized in that** the overall electrical resistance (Rfap) of the ceramic structure (9) is the electrical resistance equivalent to the association of local electrical resistances (Rb) of at least one ceramic brick (10) connected in parallel by means of electric conductors (15, 16).

4. The particle filter according to Claim 1 or Claim 2, **characterized in that** the overall electrical resistance (Rfap) of the ceramic structure (9) is the electrical resistance equivalent to the association of local electrical resistances (Rb) of at least one ceramic brick (10) connected in series by means of intermediate electric conductors (26).

5. The particle filter according to any one of Claims 1 to 4, **characterized in that** the overall electrical resistance (Rfap) is deduced from the measurement of a voltage ($U_{AC}$) in an electrical circuit with a Wheatstone bridge (1).

6. The particle filter according to Claim 5, **characterized in that** the determination means comprise a voltage sensor (3) to measure the voltage ($U_{AC}$) between two points of a diagonal (AC) of the Wheatstone bridge (1).

7. The particle filter according to any one of Claims 1 to 6, **characterized in that** it comprises temperature measurement means for measuring a temperature (Tfap) of the said particle filter (8), so as to take into account the said temperature in the determination of the overall electrical resistance (Rfap) of the ceramic structure (9).

8. The particle filter according to Claim 7, **characterized in that** the temperature measurement means include a temperature sensor (19).

9. The particle filter according to Claim 8, **characterized in that** the temperature measurement means include a digital model for estimation of the temperature (Tfap) of the particle filter (8).

10. The particle filter according to any one of Claims 7 to 9, **characterized in that** the calculation means (20) include a cartography (25) of the integrity state (Nd) of the ceramic structure (9) as a function of the voltage ($U_{AC}$) in the Wheatstone bridge (1) and of the temperature (Tfap) of the said particle filter (8).

11. A diagnostic method of a dysfunction of a particle filter (8) according to any one of Claims 7 to 10, **characterized in that** it includes the following steps:

   - the measurement of a temperature (Tfap) of the particle filter (8),
   - the determination of an overall electrical resistance (Rfap) of the ceramic structure (9),
   - the determination of an integrity state (Nd), level of degradation due to cracks of the ceramic structure (9) from the temperature (Tfap) of the particle filter (8) and the overall electrical resistance (Rfap) of the ceramic structure (9),
   - the establishing of a diagnostic of a dysfunction of the particle filter (8) on the basis of a comparison between the integrity state (Nd) of the ceramic structure (9) and a predetermined critical integrity state (Ndc).

**Patentansprüche**

1. Partikelfilter, das auf einer Auspuffanlage (5) eines Verbrennungsmotors (4) angeordnet ist, umfassend einerseits eine Keramikstruktur (9), andererseits eine Vorrichtung zum Überwachen der Funktionsfähigkeit des Partikelfilters (8), die Mittel zum Bestimmen einer physikalischen Eigenschaft der Keramikstruktur (9) aufweist, die mit Rechenmitteln (20) verbunden sind, die aus der Bestimmung einen Funktionsfähigkeitszustand (Nd), ein Verschlechterungsniveau aufgrund von Rissbildungen der Keramikstruktur (9) ableiten, **dadurch gekennzeichnet, dass** die Keramikstruktur (9) eine Vielzahl von Keramikziegeln (10) aufweist, die untereinander durch ein Klebemittel zusammengefügt sind, und dass die bestimmte physikalische Eigenschaft ein globaler elektrischer Widerstand (Rfap) der Keramikstruktur (9), der von einem lokalen elektrischen Widerstand (Rb) mindestens eines Keramikziegels (10) abhängt, ist.

2. Partikelfilter nach Anspruch 1, **dadurch gekennzeichnet, dass** der lokale elektrische Widerstand (Rb) mindestens die zentrale Zone des Keramikziegels (10) betrifft.

3. Partikelfilter nach Anspruch 1 oder Anspruch 2, **dadurch gekennzeichnet, dass** der globale elektrische Widerstand (Rfap) der Keramikstruktur (9) der elektrische Widerstand ist, der gleich der Verbindung lokaler elektrischer Widerstände (Rb) mindestens eines Keramikziegels (10) ist, die mittels elektrischer Leiter (15, 16) parallel geschaltet sind.

4. Partikelfilter nach Anspruch 1 oder Anspruch 2, **dadurch gekennzeichnet, dass** der globale elektrische Widerstand (Rfap) der Keramikstruktur (9) der elektrische Widerstand ist, der gleich der Verbindung lokaler elektrischer Widerstände (Rb) mindestens eines Keramikziegels (10) ist, die mittels elektrischer Zwischenleiter (26) in Serie geschaltet sind.

**5.** Partikelfilter nach einem der Ansprüche 1 bis 4, **dadurch gekennzeichnet, dass** der globale elektrische Widerstand (Rfap) von der Messung einer Spannung ($U_{AC}$) in einem Schaltkreis in Wheatstone-Brücke (1) abgeleitet wird.

**6.** Partikelfilter nach Anspruch 5, **dadurch gekennzeichnet, dass** die Mittel zum Bestimmen eine Spannungssonde (3) aufweisen, um die Spannung ($U_{AC}$) zwischen zwei Punkten einer Diagonale (AC) der Wheatstone-Brücke (1) zu messen.

**7.** Partikelfilter nach einem der Ansprüche 1 bis 6, **dadurch gekennzeichnet, dass** es Temperaturmessmittel zu Messen einer Temperatur (Tfap) des Partikelfilters (8) aufweist, um die Temperatur bei der Bestimmung des globalen elektrischen Widerstands (Rfap) der Keramikstruktur (9) zu berücksichtigen.

**8.** Partikelfilter nach Anspruch 7, **dadurch gekennzeichnet, dass** die Temperaturmessmittel eine Temperatursonde (19) aufweisen.

**9.** Partikelfilter nach Anspruch 8, **dadurch gekennzeichnet, dass** die Temperaturmessmittel ein digitales Schätzungsmodell der Temperatur (Tfap) des Partikelfilters (8) aufweisen.

**10.** Partikelfilter nach einem der Ansprüche 7 bis 9, **dadurch gekennzeichnet, dass** die Rechenmittel (20) eine Kartographie (25) des Funktionsfähigkeitszustands (Nd) der Keramikstruktur (9) in Abhängigkeit von der Spannung ($U_{AC}$) in der Wheatstone-Brücke (1) und der Temperatur (Tfap) des Partikelfilters (8) aufweisen.

**11.** Verfahren zur Diagnose einer Funktionsstörung eines Partikelfilters (8) nach einem der Ansprüche 7 bis 10, **dadurch gekennzeichnet, dass** es die folgenden Schritte aufweist:

- die Messung einer Temperatur (Tfap) des Partikelfilters (8),
- die Bestimmung eines globalen elektrischen Widerstands (Rfap) der Keramikstruktur (9),
- die Bestimmung eines Funktionsfähigkeitszustands (Nd), Verschlechterungsniveaus aufgrund von Rissbildungen der Keramikstruktur (9) ausgehend von der Temperatur (Tfap) des Partikelfilters (8) und dem globalen elektrischen Widerstand (Rfap) der Keramikstruktur (9),
- das Erstellen einer Diagnose einer Funktionsstörung des Partikelfilters (8) auf der Grundlage eines Vergleichs zwischen dem Funktionsfähigkeitszustand (Nd) der Keramikstruktur (9) und einem vorbestimmten kritischen Funktionsfähigkeitszustand (Ndc).

**Figure 1**

**Figure 2**

**Figure 3**

**Figure 4**

**EP 2 180 155 B1**

**Documents brevets cités dans la description**

- US 2008048681 A1